# FASCICULE DE BREVET EUROPEEN

(11) **EP 4 240 949 B1**
(45) Date de publication et mention de la délivrance du brevet: **23.07.2025**
(21) Numéro de dépôt: 21810678.9
(22) Date de dépôt: 02.11.2021
(51) Int. Cl.: F02C 6/08, F02C 9/18, F02K 1/66, F02K 1/74, F01D 17/10

(54) **ENSEMBLE POUR TURBOMACHINE D'AÉRONEF À DOUBLE FLUX, L'ENSEMBLE ÉTANT ÉQUIPÉ D'AILETTES DE DÉCHARGE D'AIR PILOTÉES EN INCIDENCE**
ZWEISTROMTRIEBWERKSANORDNUNG EINES FLUGZEUGS MIT ANSTELLWINKELGESTEUERTEN LUFTABBLASKLAPPEN
AIRCRAFT DUAL-FLOW TURBINE ENGINE ASSEMBLY, THE ASSEMBLY BEING EQUIPPED WITH INCIDENCE-CONTROLLED AIR DISCHARGE FINS

(30) Priorité: 03.11.2020 FR 2011267
(43) Date de publication de la demande: 13.09.2023
(73) Titulaire: SAFRAN AIRCRAFT ENGINES, 75015 Paris (FR)
(72) Inventeur: LEBEAULT, Eva, Julie, 77550 MOISSY-CRAMAYEL (FR); CHANEZ, Philippe, Gérard, 77550 MOISSY-CRAMAYEL (FR)
(74) Mandataire: Brevalex
(86) Numéro de dépôt international: PCT/FR2021/051918
(87) Numéro de publication internationale: WO 2022/096815

(56) Documents cités:
- FR-A1- 3 037 617
- US-A- 3 729 934
- US-A- 5 351 473

## Description

### DOMAINE TECHNIQUE

La présente invention se rapporte au domaine des turbomachines d'aéronef à double flux. Elle concerne plus particulièrement les systèmes de décharge d'air de compresseur, comprenant des ailettes de décharge destinées à orienter l'air prélevé dans la veine secondaire de la turbomachine. De telles ailettes de décharge sont par exemple connues des documents WO2016/156739 et US5351473A.

### ETAT DE LA TECHNIQUE ANTERIEURE

Sur les turbomachines d'aéronef conventionnelles à double flux, tels que les turboréacteurs à double flux et à double corps, il est connu d'implanter des systèmes de décharge d'air de compresseur basse pression. Ces systèmes, qui mettent en œuvre des vannes de décharge d'air de compresseur, également dénommées vannes VBV (de l'anglais « Variable Bleed Valve »), permettent la déviation d'une partie du flux primaire vers le flux secondaire, en sortie du compresseur basse pression. La fonction de ces systèmes de décharge réside dans l'adaptation du débit d'air en sortie du compresseur basse pression, pour assurer le fonctionnement des compresseurs haute et basse pression dans leurs domaines respectifs, et éviter ainsi des phénomènes préjudiciables tel que le pompage. Une autre fonction consiste à évacuer les grêlons par centrifugation en sortie du compresseur basse pression.

Les systèmes de décharge comprennent habituellement plusieurs conduits de décharge d'air permettant d'introduire l'air prélevé en sortie de compresseur basse pression, dans la veine secondaire. Au niveau d'un orifice de sortie de chacun de ces conduits, il est prévu des ailettes de décharge présentant un angle de calage adapté pour orienter le flux d'air prélevé avec une composante axiale vers l'aval, lors de son introduction dans la veine secondaire.

Grâce à cette orientation spécifique du flux d'air prélevé, celui-ci se mélange aisément au flux secondaire, s'écoulant dans la veine secondaire de l'amont vers l'aval en configuration normale de propulsion.

Par ailleurs, certaines architectures de turbomachine d'aéronef prévoient d'utiliser la veine secondaire comme canal d'écoulement des gaz de contre-poussée. Il s'agit par exemple de turbomachines à soufflante carénée, et dont les aubes de soufflante rotatives sont à calage variable. De telles turbomachines, à très fort taux de dilution, sont par exemple connues sous l'appellation turbomachine UHBR (de l'anglais « Ultra High By-pass Ratio »), et leur taux de dilution peut être supérieur à 15. Ce concept, communément appelé soufflante VPF (de l'anglais « Variable Pitch Fan »), est destiné à réduire encore davantage le taux de compression des soufflantes des turbomachines UHBR classiques, grâce à une augmentation du taux de dilution. Cette spécificité confère un gain très important en consommation de carburant, et procure une plage d'opérabilité étendue entre les phases de décollage et de croisière.

Néanmoins, ce type de conception à fort taux de dilution engendre un diamètre extérieur particulièrement important pour la turbomachine, qui nécessite des efforts conséquents dans le dimensionnement de la nacelle, afin d'en réduire la masse et la traînée. Une conséquence de la réduction de taille de la nacelle peut résider dans l'impossibilité d'y installer un système d'inversion de poussée classique. Dans un tel cas, la soufflante à calage variable est également employée pour inverser le sens de l'écoulement du flux secondaire dans la veine secondaire, et créer ainsi la contre-poussée de sens inversé, nécessaire à la décélération de l'aéronef lors de l'atterrissage.

En configuration d'inversion de poussée, l'écoulement inverse, principalement localisé dans une région de tête de la soufflante, contourne les lèvres de la nacelle (correspondant à l'entrée d'air dans la configuration classique de propulsion), puis s'écoule sur la surface externe de la nacelle avant d'être à nouveau introduit dans la turbomachine, par la tuyère secondaire.

Dans cette configuration d'inversion de poussée, la qualité de l'écoulement de sens opposé dans la veine secondaire est essentielle pour assurer un niveau de contre-poussée maximal. Or dans la veine secondaire, cet écoulement de gaz de contre-poussée se trouve perturbé par l'introduction à contre-courant des flux d'air de décharge prélevés en sortie du compresseur basse pression.

### EXPOSÉ DE L'INVENTION

Pour répondre à l'inconvénient mentionné ci-dessus, relatif aux réalisations de l'art antérieur, l'invention a tout d'abord pour objet une turbomachine d'aéronef à double flux, selon les caractéristiques de la revendication 1.

Ainsi, grâce au pilotage en incidence des ailettes de décharge, l'ensemble de la turbomachine selon l'invention se trouve en mesure de rejeter l'écoulement provenant du conduit de décharge dans le même sens axial que le flux de gaz de contre-poussée qui s'écoule dans la veine secondaire. En d'autres termes, l'invention permet d'adapter l'orientation des ailettes de décharge suivant que la turbomachine se trouve en configuration normale de propulsion ou de contre-poussée, de sorte que le flux d'air de déchargement puisse être toujours introduit à co-courant axial dans la veine secondaire. L'invention prévoit de préférence au moins l'une quelconque des caractéristiques optionnelles suivantes, prises isolément ou en combinaison.

De préférence, dans la position de propulsion, les ailettes de décharge présentent des premiers angles de calage aigus, orientés selon un premier sens, et dans la position d'inversion de poussée, les ailettes de décharge présentent des seconds angles de calage aigus, orientés selon un second sens opposé au premier.

De préférence, dans la position d'inversion de poussée, les ailettes de décharge mobiles d'un même conduit de décharge présentent des seconds angles de calage aigus de même valeur, ou sensiblement de même valeur.

Alternativement, dans la position d'inversion de poussée, les ailettes de décharge mobiles d'un même conduit de décharge présentent des seconds angles de calage aigus avec au moins deux valeurs différentes, les deux ailettes d'extrémité situées respectivement les plus proches des deux extrémités axiales opposées de l'orifice de sortie du conduit de décharge, présentant de préférence des seconds angles de calage aigus de valeurs supérieures à celle d'au moins une autre ailette de décharge mobile située axialement entre les deux ailettes d'extrémité. Cette différentiation dans la valeur des seconds angles de calage aigus permet de gérer localement l'orientation du flux prélevé, au niveau des zones critiques situées aux extrémités amont et aval de l'orifice de sortie du conduit de décharge.

De préférence, l'ensemble comprend des moyens de commande en incidence des ailettes de décharge mobiles, les moyens de commande étant au moins en partie agencés entre les viroles interne et externe de l'ensemble.

De préférence, chaque conduit de décharge d'air débouche dans la veine primaire à travers un orifice d'entrée équipé d'une vanne de décharge d'air de compresseur.

Dans la turbomachine d'aéronef à double flux selon l'invention, comprenant un ensemble tel que décrit ci-dessus, ce dernier peut par exemple être un moyeu de carter intermédiaire de la turbomachine.

De préférence, la turbomachine comprend une soufflante, avec des aubes de soufflantes rotatives à calage variable.

De préférence, la turbomachine comprend un réducteur d'entraînement de la soufflante. L'invention a enfin pour objet un procédé de commande d'une telle turbomachine d'aéronef, comprenant une étape de passage d'une configuration de propulsion à une configuration d'inversion de poussée, cette étape comportant une opération de modification de l'incidence des ailettes de décharge mobiles, consistant à déplacer ces ailettes de leur position de propulsion à leur position d'inversion de poussée.

D'autres avantages et caractéristiques de l'invention apparaîtront dans la description détaillée non limitative ci-dessous.

### BRÈVE DESCRIPTION DES DESSINS

Cette description sera faite au regard des dessins annexés parmi lesquels ;
[Fig. 1] représente une vue schématique de côté d'un turboréacteur selon l'invention ;
[Fig. 2] représente une vue agrandie, plus détaillée, d'un ensemble faisant partie intégrante de la turbomachine montrée sur la figure précédente, l'ensemble se présentant selon un premier mode de réalisation préféré de l'invention, avec ses ailettes de décharge en position de propulsion ;
[Fig. 3] est une vue similaire à celle de la figure 2, avec ailettes de décharge représentées en position d'inversion de poussée ;
[Fig. 4] est une vue similaire à celle de la figure 2, avec l'ensemble se présentant selon un autre mode de réalisation préféré de l'invention ; et
[Fig. 5] est une vue similaire à celle de la figure 2, avec l'ensemble se présentant selon encore un autre mode de réalisation préféré de l'invention.

### EXPOSÉ DÉTAILLÉ DE MODES DE RÉALISATION PRÉFÉRÉS

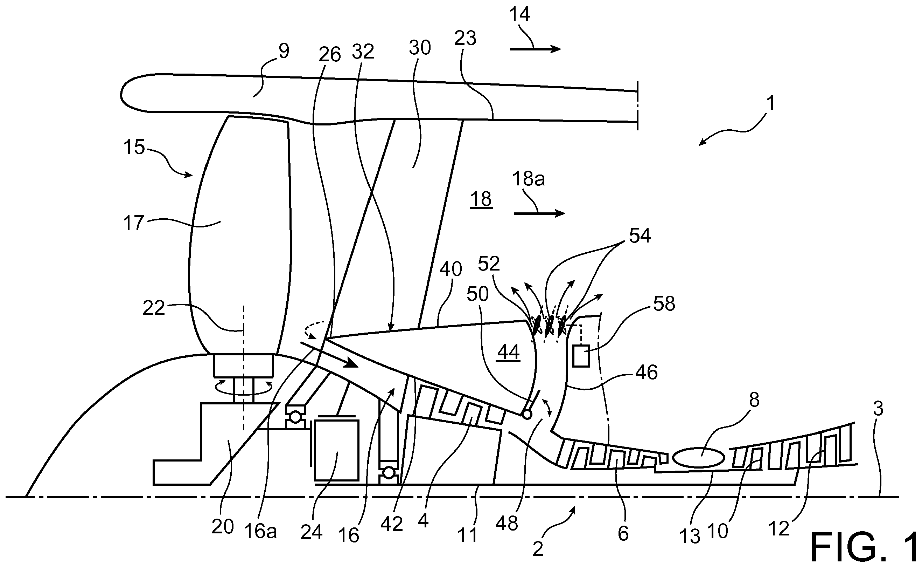

En référence à la figure 1, il est représenté un turboréacteur 1 à double flux et à double corps, présentant un taux de dilution très élevé, par exemple supérieur à 15. Le turboréacteur 1 comporte de façon classique un générateur de gaz 2 de part et d'autre duquel sont agencés un compresseur basse pression 4 et une turbine basse pression 12, ce générateur de gaz 2 comprenant un compresseur haute pression 6, une chambre de combustion 8 et une turbine haute pression 10. Par la suite, les termes « amont » et « aval » sont considérés selon une direction principale 14 d'écoulement des gaz au sein du turboréacteur, lorsque celui-ci se trouve en configuration normale de propulsion.

Le compresseur basse pression 4 et la turbine basse pression 12 forment un corps basse pression, et sont reliés l'un à l'autre par un arbre basse pression 11 centré sur un axe central longitudinal 3 du turboréacteur. De même, le compresseur haute pression 6 et la turbine haute pression 10 forment un corps haute pression, et sont reliés l'un à l'autre par un arbre haute pression 13 également centré sur l'axe 3, et agencé autour de l'arbre basse pression 11.

Le turboréacteur 1 comporte par ailleurs, en amont du générateur de gaz 2 et du compresseur basse pression 4, une soufflante 15 unique qui est ici agencée directement à l'arrière d'un cône d'entrée d'air du moteur. La soufflante 15 comporte une couronne d'aubes de soufflante 17 rotatives autour de l'axe 3, cette couronne étant entourée d'un carter de soufflante 9. Dans ce mode de réalisation préféré de l'invention, les aubes de soufflante 17 sont à calage variable, c'est-à-dire que leur incidence peut être pilotée par un mécanisme de commande 20 agencé au moins en partie dans le cône d'entrée, et conçu pour faire pivoter ces aubes 17 autour de leurs axes longitudinaux respectifs 22. Ce mécanisme de commande 20, de conception connue du type mécanique, électrique, hydraulique, et/ou pneumatique, est lui-même piloté par une unité de commande électronique (non représentée), qui permet d'ordonner la valeur des angles de calage des aubes 17 en fonction des besoins rencontrés.

La soufflante 15, du type VPF, n'est pas entraînée directement par l'arbre basse pression 11, mais seulement entraînée indirectement par cet arbre, via un réducteur d'entraînement 24, ce qui lui permet de tourner avec une vitesse plus lente. Néanmoins, une solution à entraînement direct de la soufflante 15, par l'arbre basse pression 11, entre dans le cadre de l'invention.

En outre, le turboréacteur 1 définit une veine primaire 16 destinée à être traversée par un flux primaire 16a, ainsi qu'une veine secondaire 18 destinée à être traversée par un flux secondaire 18a situé radialement vers l'extérieur par rapport au flux primaire, le flux de la soufflante étant donc divisé au niveau d'un bec 26 de séparation des flux.

Comme cela est connu de l'homme du métier, la veine secondaire 18 est délimitée radialement vers l'extérieur en partie par une virole externe 23, préférentiellement métallique, prolongeant vers l'arrière le carter de soufflante 9. De plus, en aval de la soufflante 15, dans la veine secondaire 18, il est prévu une couronne d'aubes directrices qui sont ici des aubes directrices de sortie 30 (ou OGV, de l'anglais « Outlet Guide Vane »). Ces aubes statoriques 30 relient la virole extérieure 23 à un moyeu de carter intermédiaire 32 entourant le compresseur basse pression 4. Ces aubes statoriques 30 sont espacées circonférentiellement les unes des autres, et permettent de redresser le flux secondaire après son passage à travers la soufflante 15. De plus, ces aubes 30 peuvent également remplir une fonction structurale, en assurant le transfert des efforts provenant du réducteur 24 et des paliers de roulement des arbres moteur et du moyeu de soufflante, vers la virole extérieure 23. Ensuite, ces efforts peuvent transiter par une attache moteur (non représentée) fixée sur la virole 23, et reliant le turboréacteur à un mât d'accrochage de l'aéronef. En d'autres termes, l'ensemble 32 forme le moyeu d'un carter intermédiaire, ce dernier étant complété par des bras radiaux formés par les aubes statoriques 30, et également complété par la virole extérieure 23 sur laquelle sont fixées les têtes de ces aubes 30.

L'ensemble 32 remplit également la fonction de compartiment inter-veine, en étant réalisé au droit des pieds des aubes statoriques 30, mais pouvant également se prolonger vers l'aval comme cela a été schématisé sur la figure 1. Cet ensemble comporte une virole externe 40 configurée pour délimiter intérieurement une partie de la veine secondaire 18 d'écoulement de gaz, ainsi qu'une virole interne 42 configurée pour délimiter extérieurement la veine primaire 16 d'écoulement des gaz. Les deux viroles 40, 42 s'étendent vers l'aval à partir du bec de séparation 26, qui les relie. Entre ces deux viroles 40, 42, il est effectivement délimité un compartiment inter-veines 44, dans lequel peuvent être agencés diverses composants et équipements du turboréacteur.

En aval des aubages statoriques 30, l'ensemble 32 est équipé d'une pluralité de conduits de décharge d'air 46, répartis autour de l'axe 3. Chaque conduit de décharge 46 s'étend globalement radialement, éventuellement avec une composante axiale allant vers l'aval, en allant de la virole interne 42 à la virole externe 40, de manière à pouvoir faire communiquer la veine primaire 16 avec la veine secondaire 18. Plus précisément, chaque conduit de décharge d'air 46 débouche dans la veine primaire 16 à travers un orifice d'entrée 48 équipé d'une vanne de décharge VBV 50, l'orifice d'entrée 48 étant agencé axialement entre le compresseur basse pression 4 et le compresseur haute pression 6. De même, chaque conduit de décharge d'air 46 débouche dans la veine secondaire 18, à travers un orifice de sortie 52 équipé d'ailettes de décharge 54.

Les ailettes de décharge 54 présentent ici la spécificité d'être pilotées en incidence dans l'orifice de sortie 52, de manière à s'adapter à la configuration du turboréacteur. Ces ailettes 54 sont ainsi capables d'être déplacées d'une position de propulsion montrée en train plein sur la figure 1, à une position d'inversion de poussée montrée en pointillés sur cette même figure, et inversement. L'objectif réside ainsi dans l'adaptation de l'angle de calage de ces ailettes 54, de sorte que le flux d'air de déchargement provenant du compresseur basse pression 4 puisse être introduit à co-courant axial dans la veine secondaire 18, et ce que le turboréacteur soit en configuration normale de propulsion, ou en configuration d'inversion de poussée.

Le pilotage en incidence des ailettes de déchargement 54 s'effectue à l'aide de moyens de commande 58, de conception connue du type mécanique, électrique, hydraulique, et/ou pneumatique. Ces moyens de commande 58 sont préférentiellement agencés, au moins en partie, dans l'espace inter-veines 44, et ils sont eux-mêmes pilotés par une unité de commande électronique (non représentée), qui permet d'ordonner la position d'ailettes requise en fonction de la configuration du turboréacteur.

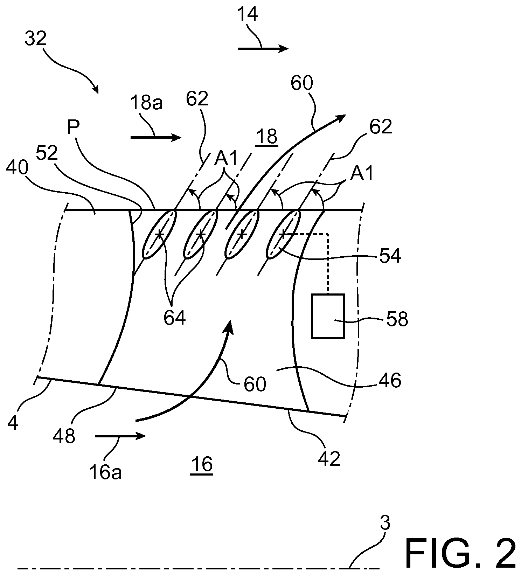

La figure 2 représente les ailettes de décharge 54 dans leur position de propulsion, permettant d'introduire le flux d'air de déchargement 60 à co-courant axial avec le flux d'air secondaire 18a circulant dans la veine secondaire 18 du turboréacteur en configuration normale de propulsion. Pour ce faire, les ailettes 54 présentent des premiers angles de calage aigus A1, orientés selon un premier sens, correspondant au sens antihoraire sur la figure 2. L'angle de calage de chaque ailette 54 est défini, de manière classique, entre un plan de décharge P tangent ou sensiblement tangent à la virole externe 40 au niveau de l'orifice de sortie 52, et une direction de la corde 62 d'un profil de cette ailette 54.

Ici, les premiers angles de calage aigus A1 sont pour toutes les ailettes 54 de valeur identique ou sensiblement identique, et par exemple compris entre 20 et 70°. L'inclinaison retenue est donc telle que le flux d'air de déchargement 60, en provenance du flux primaire 16a, soit introduit dans la veine secondaire 18 depuis l'orifice 52 selon une direction d'introduction comprenant une composante axiale allant de l'amont vers l'aval, en rapport à la direction principale d'écoulement 14. Cette direction d'introduction du flux d'air de déchargement 60 correspond ici à la direction de corde 62 des ailettes de décharge 54, du fait de leur forme préférentiellement symétrique.

Le changement de position des ailettes de décharge 54 s'opère via les moyens de commande dédiés 58. A cet égard, il est noté que ces moyens 58 peuvent piloter individuellement l'incidence de chacune des ailettes, ou bien les piloter par groupe, voire les piloter toutes simultanément par le biais de mécanismes de liaison reliant ces différentes ailettes d'un même conduit 46. D'ailleurs, il est noté que dans l'orifice de sortie 52 de chaque conduit de décharge 46, les ailettes 54 peuvent être agencées au sein d'une ou plusieurs grilles d'ailettes (non représentées) obturant partiellement cet orifice 52. Le changement de position consiste à faire pivoter les ailettes 54 selon leurs axes de calage en incidence 64, qui sont préférentiellement des axes orientés selon une direction tangentielle en rapport à l'axe 3, c'est-à-dire des axes parallèles au plan de décharge P, ou inscrits dans ce dernier.

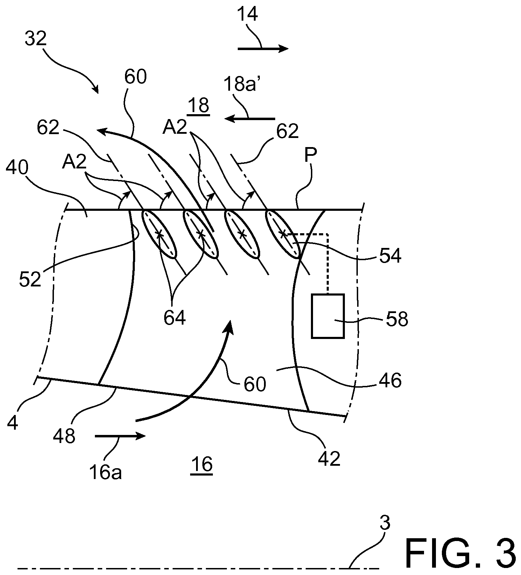

La figure 3 représente les ailettes de décharge 54 dans leur position d'inversion de poussée, après leurs pivotements provoqués par les moyens de commande 58 autour des axes de calage en incidence 64. Dans cette position d'inversion de poussée des ailettes de décharge 54, celles-ci permettent d'introduire le flux d'air de déchargement 60 à co-courant axial avec un flux de gaz de contre-poussée 18a' circulant dans la veine secondaire 18 du turboréacteur en configuration d'inversion de poussée. Pour ce faire, les ailettes 54 présentent des seconds angles de calage aigus A2, orientés selon un second sens opposé au premier, et correspondant au sens horaire sur la figure 3. Cet angle de calage de chaque ailette 54 est aussi défini, de manière classique, entre le plan de décharge P tangent ou sensiblement tangent à la virole externe 40 au niveau de l'orifice de sortie 52, et la direction de la corde 62 d'un profil de cette ailette 54.

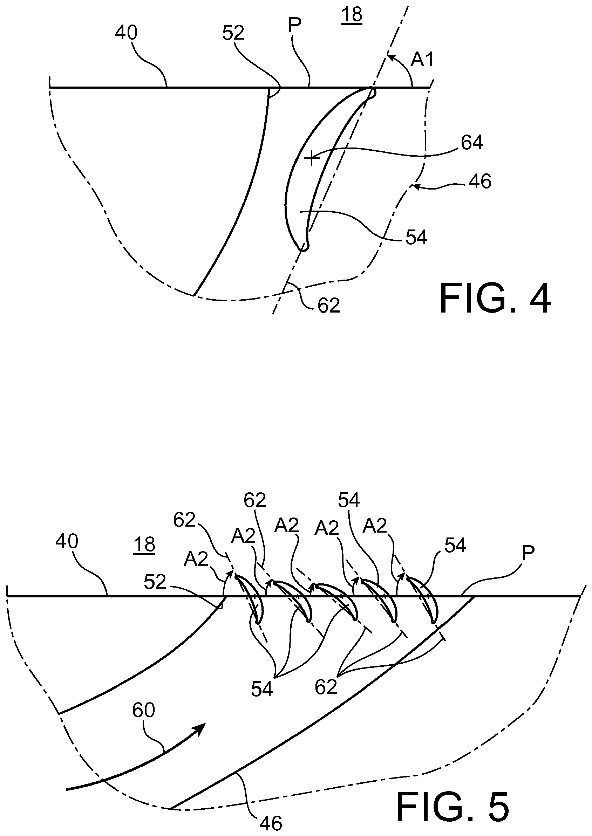

Les seconds angles de calage aigus A2 sont ici, pour toutes les ailettes 54, de valeur identique ou sensiblement identique, et par exemple compris entre 20 et 70°. L'inclinaison retenue est donc telle que le flux d'air de déchargement 60, en provenance du flux primaire 16a, soit introduit dans la veine secondaire 18 depuis l'orifice 52 selon une direction d'introduction comprenant une composante axiale allant de l'aval vers l'amont, en rapport à la direction principale d'écoulement 14. Cette direction d'introduction du flux d'air de déchargement 60 correspond ici à la direction de corde 62 des ailettes de décharge 54, du fait de leur forme préférentiellement symétrique. D'autres modes de réalisation préférés de l'invention sont envisageables, comme le fait de prévoir des ailettes de décharge 54 de forme non symétrique, par exemple adoptant une profil d'aube comme cela a été représenté sur la figure 4.

Un autre mode est représenté sur la figure 5, dans lequel en position d'inversion de poussée, les ailettes 54 d'un même conduit de décharge 46 ne présentent plus des seconds angles de calage aigus A2 de même valeur ou sensiblement de même valeur, mais présentent au contraire au moins deux valeurs différentes. Dans ce mode, les deux ailettes 54 qui présentent la plus grande valeur pour le second angle de calage aigu A2 sont les deux ailettes d'extrémité, situées respectivement aux deux extrémités axiales opposées de l'orifice de sortie 52. La valeur de cet angle A2 est donc plus faible pour les autres ailettes 54 situées plus au centre, avec éventuellement une diminution progressive de cette valeur d'angle en allant vers le centre de l'orifice de sortie 52.

En alternative, la plus grande valeur pour le second angle de calage aigu A2 pourrait être appliquée seulement à l'ailette d'extrémité amont 54, pour assurer le contournement de la zone critique constituée par la portion d'extrémité amont de l'orifice de sortie 52 en forme de bec. En effet, dans cette zone critique montrée sur la figure 5, un rabattement axial trop important du flux d'air de déchargement 60 pourrait s'avérer inapproprié en vue du contournement du bec, d'où l'intérêt d'élever localement la valeur de l'angle A2 pour l'ailette de déchargement située directement en regard axialement de ce bec.

Bien entendu, diverses modifications peuvent être apportées par l'homme du métier à l'invention qui vient d'être décrite, uniquement à titre d'exemples non limitatifs et dont la portée est définie par les revendications annexées.

## Revendications

1. Turbomachine (1) d'aéronef à double flux, comprenant un ensemble (32)comportant :
- une virole interne (42) configurée pour délimiter extérieurement une veine primaire (16) d'écoulement des gaz de la turbomachine ;
- une virole externe (40) configurée pour délimiter intérieurement une veine secondaire (18) d'écoulement de gaz de la turbomachine ;
- au moins un conduit de décharge d'air (46) s'étendant entre la virole interne (42) et la virole externe (40), le conduit de décharge d'air (46) débouchant dans la veine secondaire (18) à travers un orifice de sortie (52) équipé d'ailettes de décharge (54),
**caractérisée en ce qu'**au moins certaines desdites ailettes de décharge (54) sont montées mobiles de manière à pouvoir être pilotées en incidence entre une position de propulsion, et une position d'inversion de poussée,
**en ce que** l'ensemble est conçu pour amener les ailettes de décharge (54) dans la position de propulsion, de sorte que le flux d'air de déchargement (60), en provenance du flux primaire (16a), soit introduit dans la veine secondaire (18) depuis l'orifice de sortie (52) selon une direction d'introduction comprenant une composante axiale allant de l'amont vers l'aval, à co-courant axial avec le flux d'air secondaire (18a) circulant dans la veine secondaire (18) de la turbomachine en configuration normale de propulsion,
et **en ce que** l'ensemble est également conçu pour amener les ailettes de décharge (54) dans la position d'inversion de poussée, de sorte que le flux d'air de déchargement (60), en provenance du flux primaire (16a), soit introduit dans la veine secondaire (18) depuis l'orifice de sortie (52) selon une direction d'introduction comprenant une composante axiale allant de l'aval vers l'amont, à co-courant axial avec un flux de gaz de contre-poussée (18a') circulant dans la veine secondaire (18) de la turbomachine en configuration d'inversion de poussée.

2. Turbomachine selon la revendication 1, **caractérisée en ce que** dans la position de propulsion, les ailettes de décharge (54) présentent des premiers angles de calage aigus (A1), orientés selon un premier sens, et **en ce que** dans la position d'inversion de poussée, les ailettes de décharge (54) présentent des seconds angles de calage aigus (A2), orientés selon un second sens opposé au premier.

3. Turbomachine selon la revendication 2, **caractérisée en ce que** dans la position d'inversion de poussée, les ailettes de décharge mobiles (54) d'un même conduit de décharge (46) présentent des seconds angles de calage aigus (A2) de même valeur, ou sensiblement de même valeur.

4. Turbomachine selon la revendication 2, **caractérisée en ce que** dans la position d'inversion de poussée, les ailettes de décharge mobiles (54) d'un même conduit de décharge (46) présentent des seconds angles de calage aigus (A2) avec au moins deux valeurs différentes, les deux ailettes d'extrémité (54) situées respectivement les plus proches des deux extrémités axiales opposées de l'orifice de sortie (52) du conduit de décharge (46), présentant de préférence des seconds angles de calage aigus (A2) de valeurs supérieures à celle d'au moins une autre ailette de décharge mobile (54) située axialement entre les deux ailettes d'extrémité.

5. Turbomachine selon l'une quelconque des revendications précédentes, **caractérisée en ce que** l'ensemble comprend des moyens (58) de commande en incidence des ailettes de décharge mobiles (54), les moyens de commande (58) étant au moins en partie agencés entre les viroles interne et externe (42, 40) de l'ensemble.

6. Turbomachine selon l'une quelconque des revendications précédentes, **caractérisée en ce qu'**elle comprend une soufflante (15), avec des aubes de soufflantes rotatives (17) à calage variable.

7. Turbomachine selon l'une quelconque des revendications précédentes, **caractérisée en ce qu'**elle comprend un réducteur d'entraînement (24) de la soufflante (15).

8. Procédé de commande d'une turbomachine (1) d'aéronef selon l'une quelconque des revendications précédentes, **caractérisé en ce qu'**il comprend une étape de passage d'une configuration de propulsion à une configuration d'inversion de poussée, cette étape comportant une opération de modification de l'incidence des ailettes de décharge mobiles (54), consistant à déplacer ces ailettes de leur position de propulsion à leur position d'inversion de poussée, de sorte que le flux d'air de déchargement (60), en provenance du flux primaire (16a), soit introduit dans la veine secondaire (18) depuis l'orifice de sortie (52) selon une direction d'introduction comprenant une composante axiale allant de l'aval vers l'amont, à co-courant axial avec un flux de gaz de contre-poussée (18a') circulant dans la veine secondaire (18) de la turbomachine en configuration d'inversion de poussée.

## Patentansprüche

1. Zweistrom-Turbinenmotor (1) für Flugzeuge, umfassend eine Baugruppe (32), die Folgendes beinhaltet:
- eine Innenschale (42), die so konfiguriert ist, dass sie extern einen primären Strompfad (16) des Gasstroms des Turbinenmotors definiert;
- eine Außenschale (40), die so konfiguriert ist, dass sie intern einen sekundären Strompfad (18) des Gasstroms des Turbinenmotors definiert;
- mindestens einen Luftauslasskanal (46), der sich zwischen der Innenschale (42) und der Außenschale (40) erstreckt, wobei der Luftauslasskanal (46) durch eine mit Auslassrippen (54) ausgestattete Auslassöffnung (52) in den sekundären Strompfad (18) mündet,
**dadurch gekennzeichnet, dass** mindestens eine der Auslassrippen (54) beweglich gelagert ist, um zwischen einer Vortriebsstellung und einer Schubumkehrstellung anfallgesteuert werden zu können,
dass die Baugruppe so ausgebildet ist, dass sie die Auslassrippen (54) in der Vortriebsstellung bewegt, so dass der Auslassluftstrom (60) von dem primären Strom (16a) in den sekundären Strompfad (18) von der Auslassöffnung (52) entlang einer Einleitungsrichtung eingeführt wird, die eine axiale Komponente von stromaufwärts nach stromabwärts umfasst, die axial mit dem sekundären Luftstrom (18a) zusammenströmt, der in dem sekundären Strompfad (18) des Turbinenmotors in der normalen Vortriebskonfiguration strömt,
und dass die Baugruppe auch dazu ausgebildet ist, die Auslassrippen (54) in der Schubumkehrstellung zu bewegen, so dass der Auslassluftstrom (60) von dem primären Strom (16a) in den sekundären Strompfad (18) von der Auslassöffnung (52) entlang einer Einleitungsrichtung eingeführt wird, die eine axiale Komponente von stromabwärts nach stromaufwärts umfasst, die axial mit dem Gegenschubgasstrom (18a') zusammenströmt, der in dem sekundären Strompfad (18) des Turbinenmotors in der Schubumkehrkonfiguration strömt.

2. Turbinenmotor nach Anspruch 1, **dadurch gekennzeichnet, dass** in der Vortriebsstellung die Auslassrippen (54) erste spitze Steigungswinkel (A1) aufweisen, die in eine erste Richtung ausgerichtet sind, und dass in der Schubumkehrstellung die Auslassrippen (54) zweite spitze Steigungswinkel (A2) aufweisen, die in eine zweite Richtung entgegengesetzt zur ersten ausgerichtet sind.

3. Turbinenmotor nach Anspruch 2, **dadurch gekennzeichnet, dass** in der Schubumkehrstellung die beweglichen Auslassrippen (54) desselben Auslasskanals (46) zweite spitze Steigungswinkel (A2) desselben Wertes oder im Wesentlichen desselben Wertes aufweisen.

4. Turbinenmotor nach Anspruch 2, **dadurch gekennzeichnet, dass** die beweglichen Auslassrippen (54) desselben Auslasskanals (46) in der Schubumkehrstellung zweite spitze Steigungswinkel (A2) mit mindestens zwei unterschiedlichen Werten aufweisen, wobei die beiden Endrippen (54), die jeweils den beiden gegenüberliegenden axialen Enden der Auslassöffnung (52) des Auslasskanals (46) am nächsten liegen, vorzugsweise zweite spitze Steigungswinkel (A2) mit Werten aufweisen, die größer sind als die von mindestens einer anderen beweglichen Auslassrippe (54), die axial zwischen den beiden Endrippen angeordnet ist.

5. Turbinenmotor nach einem der vorhergehenden Ansprüche, **dadurch gekennzeichnet, dass** die Baugruppe Anfallsteuermittel (58) der beweglichen Auslassrippen (54) umfasst, wobei die Steuermittel (58) mindestens teilweise zwischen der Innen- und Außenschale (42, 40) der Baugruppe angeordnet sind.

6. Turbinenmotor nach einem der vorhergehenden Ansprüche, **dadurch gekennzeichnet, dass** er einen Lüfter (15) mit drehbaren Verstelllsteigungs-Lüfterschaufeln (17) umfasst.

7. Turbinenmotor nach einem der vorhergehenden Ansprüche, **dadurch gekennzeichnet, dass** er ein Antriebsuntersetzungsgetriebe (24) des Lüfters (15) umfasst.

8. Verfahren zur Steuerung eines Turbinenmotors (1) für Flugzeuge nach einem der vorhergehenden Ansprüche, **dadurch gekennzeichnet, dass** es einen Schritt des Umschaltens von einer Antriebskonfiguration in eine Schubumkehrkonfiguration umfasst, wobei dieser Schritt einen Vorgang beinhaltet, der einen Vorgang der Änderung des Auftretens der beweglichen Auslassrippen (54) umfasst, der darin besteht, diese Rippen von ihrer Antriebsstellung in ihre Schubumkehrstellung zu bewegen, so dass der Auslassluftstrom (60) aus dem primären Strom (16a) in den sekundären Strompfad (18) von der Auslassöffnung (52) entlang einer Einleitungsrichtung eingeführt wird, die eine axiale Komponente von stromabwärts nach stromaufwärts umfasst, die axial mit dem in dem sekundären Strompfad (18) des Turbinenmotors in der Schubumkehrkonfiguration strömenden Gegenschubgasstrom (18a') zusammenströmt.

## Claims

1. Aircraft dual-flow turbine engine (1), comprising an assembly (32) including:
- an inner shell (42) configured to externally define a primary flow path (16) of gas flow of the turbine engine;
- an outer shell (40) configured to internally define a secondary flow path (18) of gas flow of the turbine engine;
- at least one air discharge duct (46) extending between the inner shell (42) and the outer shell (40), the air discharge duct (46) opening into the secondary flow path (18) through an outlet orifice (52) equipped with discharge fins (54),
**characterised in that** at least one of said discharge fins (54) are movably mounted so as to be able to be incidence-controlled between a propulsion position, and a thrust reversal position,
**in that** the assembly is designed to move the discharge fins (54) in the propulsion position, such that the discharge air flow (60), from the primary flow (16a), is introduced into the secondary flow path (18) from the outlet orifice (52) along an introduction direction comprising an axial component from upstream to downstream, axially co-current with the secondary air flow (18a) flowing in the secondary flow path (18) of the turbine engine in the normal propulsion configuration,
and **in that** the assembly is also designed to move the discharge fins (54) in the thrust reversal position, such that the discharge air flow (60), from the primary flow (16a), is introduced into the secondary flow path (18) from the outlet orifice (52) along an introduction direction comprising an axial component from downstream to upstream, axially co-current with the counter-thrust gas flow (18a') flowing in the secondary flow path (18) of the turbine engine in the thrust reversal configuration.

2. Turbine engine according to claim 1, **characterised in that** in the propulsion position, the discharge fins (54) have first acute pitch angles (A1), oriented in a first direction, and **in that** in the thrust reversal position, the discharge fins (54) have second acute pitch angles (A2), oriented in a second direction opposite the first.

3. Turbine engine according to claim 2, **characterised in that** in the thrust reversal position, the movable discharge fins (54) of the same discharge duct (46) have second acute pitch angles (A2) of the same value, or substantially the same value.

4. Turbine engine according to claim 2, **characterised in that** in the thrust reversal position, the movable discharge fins (54) of the same discharge duct (46) have second acute pitch angles (A2) with at least two different values, the two end fins (54) located respectively closest to the two opposite axial ends of the outlet orifice (52) of the discharge duct (46), preferably having second acute pitch angles (A2) of values greater than that of at least one other movable discharge fin (54) located axially between the two end fins.

5. Turbine engine according to any one of the preceding claims, **characterised in that** the assembly comprises incidence control means (58) of the movable discharge fins (54), the control means (58) being at least partially arranged between the inner and outer shell (42, 40) of the assembly.

6. Turbine engine according to any one of the preceding claims, **characterised in that** it comprises a fan (15), with rotary variable-pitch fan vanes (17).

7. Turbine engine according to any one of the preceding claims, **characterised in that** it comprises a drive reduction gear (24) of the fan (15).

8. Method for controlling an aircraft turbine engine (1) according to any one of the preceding claims, **characterised in that** it comprises a step of switching from a propulsion configuration to a thrust reversal configuration, this step including an operation including an operation of modifying the incidence of the movable discharge fins (54), consisting of moving these fins from the propulsion position thereof to the thrust reversal position thereof, such that the discharge air flow (60), from the primary flow (16a), is introduced into the secondary flow path (18) from the outlet orifice (52) along an introduction direction comprising an axial component from downstream to upstream, axially co-current with the counter-thrust gas flow (18a') flowing in the secondary flow path (18) of the turbine engine in the thrust reversal configuration.
